# EUROPÄISCHE PATENTSCHRIFT

(11) **EP 2 121 407 B1**
(45) Veröffentlichungstag und Bekanntmachung des Hinweises auf die Patenterteilung: **02.02.2011**
(21) Anmeldenummer: 08715477.9
(22) Anmeldetag: 09.02.2008
(51) Int. Cl.: B61D 17/22

(54) **MATERIALBAHN ZUR HERSTELLUNG EINES BALGES EINES ÜBERGANGS, INSBESONDERE ZWISCHEN ZWEI GELENKIG MITEINANDER VERBUNDENER FAHRZEUGTEILE**
MATERIAL WEB FOR THE PRODUCTION OF A BELLOWS OF A TRANSITIONAL SECTION, PARTICULARLY BETWEEN TWO ARTICULATED VEHICLE PARTS
BANDE DE MATÉRIAU POUR PRODUIRE UN SOUFFLET DE PASSAGE, NOTAMMENT ENTRE DEUX PARTIES DE VÉHICULE INTERCONNECTÉES PAR ARTICULATION

(30) Priorität: 20.02.2007 DE 102007008276
(43) Veröffentlichungstag der Anmeldung: 25.11.2009
(73) Patentinhaber: Hübner GmbH, 34123 Kassel (DE)
(72) Erfinder: KOUKAL, Claus-Ekkehard, 34128 Kassel (DE)
(74) Vertreter: Walther, Walther & Hinz GbR
(86) Internationale Anmeldenummer: PCT/DE2008/000244
(87) Internationale Veröffentlichungsnummer: WO 2008/101467

(56) Entgegenhaltungen:
- EP-A- 0 675 220
- EP-A- 1 688 278
- WO-A-95/00381
- DE-A1- 3 035 159
- DE-U1- 8 903 746
- DE-U1- 9 217 352

## Beschreibung

Die Erfindung betrifft einen Balg eines Übergangs, insbesondere zwischen zwei gelenkig miteinander verbundener Fahrzeugteile mit mindestens einer Materialbahn.

Eine Materialbahn für einen Balg ist zum Beispiel aus dem Stand der Technik gemäß der EP 0 607 503 B1 oder der EP-A1-1688278 bekannt. Hierbei ist ein Gewebe vorgesehen, wobei auf dem Gewebe eine Einlage aus Metalldrähten vorgesehen ist, die ebenfalls beispielsweise als Metallgewebe ausgebildet ist, wobei über dieser Einlage aus Metallgewebe ein Vlies in Form eines Nadelfilzes angeordnet ist. Hierbei ist das Gewebe beschichtet, und die Einlage ist durch einen Vulkanisationsvorgang mit dem beschichteten Gewebe verbunden. Das Vlies aus beispielsweise Nadelfilz ist aufkaschiert.

Wesentlich hierbei ist, dass ein mit einer solchen Materialbahn hergestellter Balg in gewissem Umfang vandalismussicher ist. Dies deshalb, weil ein Messer, das beim Schneiden durch den Balg auf diese Metalleinlage, das heißt die Drähte eines beispielsweise Metallgewebes trifft, diese so ohne Weiteres nicht durchtrennt, sondern vielmehr die einzelnen Fäden in Schneidrichtung zieht, bis eine Vielzahl von derartigen Metallfäden aneinander liegen, die dann schlussendlich dem weiteren Schneidvorgang genügend Widerstand entgegensetzen, um eine weitere Zerstörung des Balges zu verhindern.

Vom Grundsatz her bietet ein solchermaßen hergestellter Balg bereits eine ausreichende Sicherheit gegenüber Vandalismus und hier insbesondere Vandalismus mit Schneidwerkzeugen. Es hat sich allerdings herausgestellt, dass insbesondere im Bereich starker Knickung die metallischen Fäden, die die Einlage bilden, brechen. Dies ist an sich nicht besonders tragisch, weil nur in diesem Bereich der extremen Knickung insofern dann kein Schutz mehr vor einem Zerschneiden des Balges besteht. Die Wahrscheinlichkeit ist relativ gering, dass eine Person, deren Ziel die Zerstörung eines solchen Balges ist, tatsächlich weiß, dass genau in diesem Bereich beim Ansatz mit einem Messer kein entsprechender Widerstand entgegengesetzt werden würde.

Andererseits besteht durchaus der Wunsch, und zwar auf Seiten der Verkehrsbetriebe, einen Balg bereitzustellen, der tatsächlich über seine gesamte Oberfläche in gleicher Weise vandalismussicher ausgebildet ist, also auch im Bereich von Knickstellen.

Der Erfindung liegt daher die Aufgabe zugrunde, einen Balg mit mindestens einer Materialbahn bereitzustellen, die über die gesamte Fläche vandalismussicher ist, das heißt, also insbesondere auch im Bereich von Stellen starker Knickung.

Die Aufgabe wird erfindungsgemäß dadurch gelöst, dass die Materialbahn ein Ringgewebe, insbesondere ein metallisches Ringgewebe aufweist. Ein solches metallisches Ringgewebe zeichnet sich durch einzelne miteinander verbundene metallische Ringe aus, ähnlich wie bei einem Kettenhemd, wie sie beim Personenschutz Verwendung finden. Ein solches Ringgewebe wird auch verwendet zur Herstellung von Handschuhen für Personen, die in der Fleischverarbeitung arbeiten. Wie bereits erläutert, sind bei einem solchen Ringgewebe die einzelnen gewebebildenden Ringe untereinander verbunden. Es sind allerdings auch Ringgewebe bekannt, bei denen die metallischen Ringe durch Fäden miteinander verbunden sind, wobei ein solches Ringgewebe aus der DE 198 33 816 A1 bekannt ist. All diesen Ringgeweben ist gemein, dass diese von extrem hoher Flexibilität sind, aber dennoch ausreichenden Schutz vor Angriffen mit Schneidwerkzeugen bieten. Das heißt, die Beweglichkeit oder Flexibilität wird erreicht, ohne dass das Ringgewebe plastisch in irgendeiner Weise verformt würde. Eine solchermaßen aufgebaute Materialbahn für einen Balg wird demzufolge auch im Bereich von Knickungen nicht reißen, was bedeutet, dass über die gesamte Fläche eines solchermaßen hergestellten Balges ein solcher Balg vandalismussicher ist.

Vorteilhafte Merkmale und Weiterentwicklungen ergeben sich aus den Unteransprüchen.

So ist insbesondere nach einem Merkmal der Erfindung vorgesehen, dass das Ringgewebe in eine elastische Kunststoffschicht eingebettet ist, zum Beispiel ein Silikon oder ein Elastomerkautschuk. Es hat sich überraschenderweise herausgestellt, dass durch die Einbettung des Ringgewebes in einen solchen Elastomer- oder Silikonkautschuk die Beweglichkeit des Ringgewebes als solche kaum beziehungsweise nicht nennenswert beeinträchtigt ist, dass heißt, nicht in der Form beeinträchtigt ist, als dass eine derart hergestellte Materialbahn nicht als Materialbahn für die Herstellung eines Balges zum Beispiel eines Falten- oder Wellenbalges eines Übergangs dienen könnte.

Nach einer besonderen Ausführungsform ist vorgesehen, dass die Materialbahn mindestens eine textile Lage aufweist, wobei das Ringgewebe mit dieser mindestens einen textilen Lage verbindbar ist. Die Verbindung zwischen der textilen Lage und dem Ringgewebe erfolgt insbesondere durch Nähen oder Heften in der Form, dass die Beweglichkeit der Materialbahn hinsichtlich ihrer Biegeeigenschaften nicht oder nicht nennenswert beeinträchtigt ist. In einem solchen Fall kann dann auch die textile Lage, beispielsweise ein Gestricke oder ein Gewirke oder auch ein Gewebe, außen mit einer Kunststoffschicht beschichtet sein.

Eine besonders vorteilhafte Ausführungsform zeichnet sich dadurch aus, dass auf jeder Seite des Ringgewebes eine textile Lage angeordnet ist, zum Beispiel in der Form eines Gestrickes, Gewirkes oder Gewebes, wobei die beiden textilen Lagen durch das Ringgewebe hindurch miteinander zum Beispiel durch Nähen oder Heften verbunden sind, wobei die Verbindung ebenfalls der Art ist, dass die Beweglichkeit einer solchermaßen hergestellten Materialbahn nicht beeinträchtigt ist. Dies bedeutet, dass die Verbindung der beiden textilen Lagen durch das Ringgewebe hindurch mit einem gewissen Spiel erfolgt, das heißt, dass durch das Nähen oder Heften das Ringgewebe lediglich in seiner vorbestimmten Position zwischen den beiden textilen Lagen gehalten wird. Um eine solchermaßen hergestellte Materialbahn feuchtigkeitsdicht herzustellen, ist zumindest eine Seite einer solchen Materialbahn mit einer Kunststoffschicht beschichtet. Vorteilhaft ist bei der Beschichtung darauf zu achten, dass die textilen Lagen nur auf ihrer äußeren Oberseite diese Kunststoffschicht aufweisen.

Anhand der Zeichnungen wird die Erfindung nachstehend beispielhaft näher erläutert.
- Fig. 1: zeigt schematisch ein solches Ringgewebe;
- Fig. 2: zeigt ein metallisches Ringgewebe, wobei die einzelnen Metallringe durch Fäden miteinander verbunden sind;
- Fig. 3: zeigt ein Ringgewebe eingebettet in einer Kunststoffschicht;
- Fig. 4: zeigt schematisch ein Ringgewebe zwischen zwei textilen Lagen;
- Fig. 5: zeigt eine Ausführungsform einer Materialbahn gemäß Fig. 4, wobei die beiden textilen Lagen, zwischen denen das Ringgewebe angeordnet ist, durch Fäden miteinander beabstandet verbunden sind;
- Fig. 6: zeigt eine Ausführungsform gemäß Fig. 5, wobei die textilen Lagen eine Kunststoffbeschichtung aufweisen.

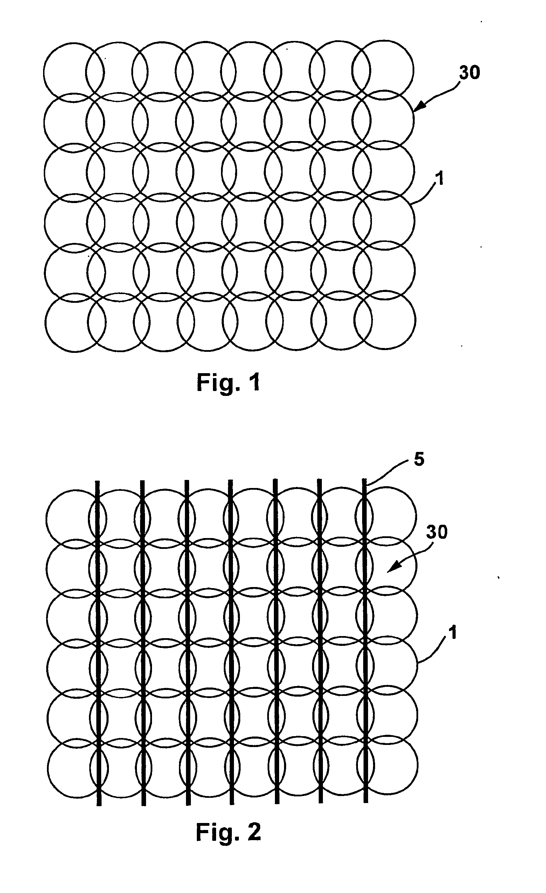

Gemäß Fig. 1 zeichnet sich das Ringgewebe 30 durch einzelne metallische Ringe 1 aus, wobei ein jeder Ring mit seinem benachbarten Ring verbunden ist. Hierbei sind zur Verbindung der Ringe untereinander die Öffnungen der Ringe beispielsweise miteinander verlötet.

Aus Fig. 2 ergibt sich eine andere Art der Ausbildung eines solchen Ringgewebes 30, wobei das dort dargestellte Ringgewebe sich dadurch auszeichnet, dass die einzelnen Ringe 1 untereinander durch Fäden 5 miteinander in Verbindung stehen.

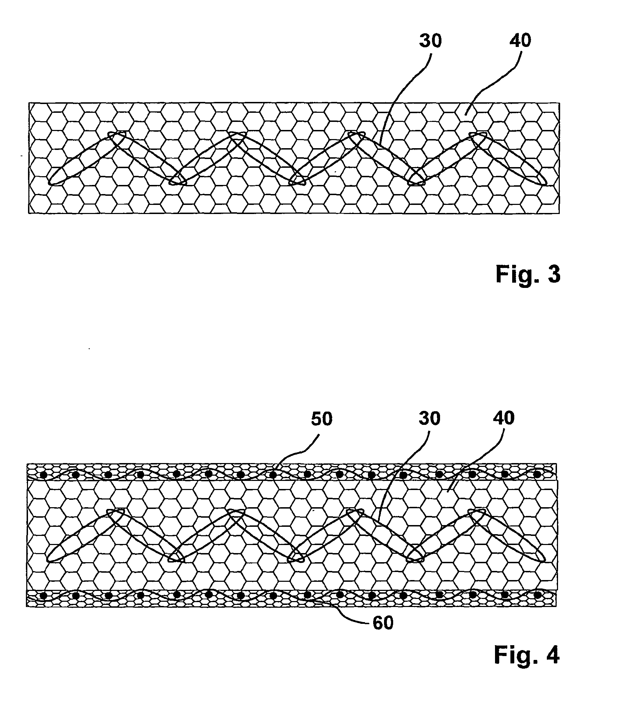

Fig. 3 zeigt eine Ausführungsform, bei der ein solches Ringgewebe 30 in einer Kunststoffschicht 40 eingebettet ist. Die Kunststoffschicht kann hierbei ein Elastomerkautschuk oder Silikonkautschuk sein.

Fig. 4 zeigt eine Ausführungsform, bei der das Ringgewebe 30 gemäß Fig. 3, das dort in eine Kunststoffschicht eingebettet ist, zu beiden Seiten mit einer textilen Lage 50 zum Beispiel einem Gestricke, Gewirke oder Gewebe versehen ist. Die textile Lage kann hierbei ein- oder mehrlagig ausgebildet sein und ebenfalls in einer Schaumstoffschicht eingebettet sein. Eine solche textile Lage hat zum einen optische Gründe, dient aber ganz erheblich auch der Erhöhung der Sicherheit gegen Zerstörung, da die textilen Lagen ebenfalls für eine gewisse Schneidresistenz sorgen.

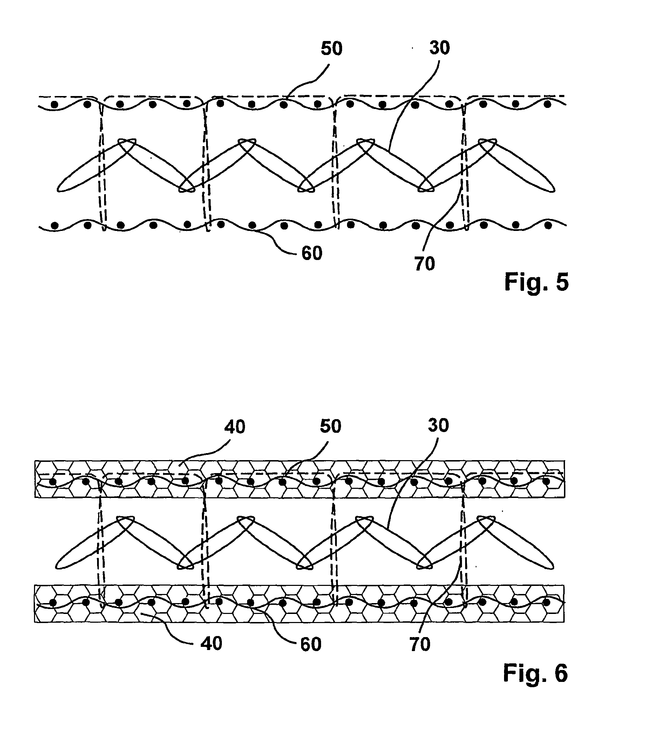

Um die Beweglichkeit einer solchen Materialbahn zu erhalten kann nach einer weiteren Ausführungsform vorgesehen sein, die beiden textilen Lagen 50, 60 durch das Ringgewebe 30 hindurch miteinander durch Fäden 70, die z. B. durch Nähen erzeugt sind, zu verbinden, wobei die Fäden 70 einen bestimmten Abstand zueinander aufweisen, der in etwa der Höhe eines zusammengeschobenen Ringgewebes entspricht, wie dies besonders deutlich aus der Fig. 5 hervorgeht. Eine solche Materialbahn ist ähnlich aufgebaut wie ein Mali-Vlies, wobei um eine solche Materialbahn flüssigkeitsdicht zu gestalten gemäß Fig. 6 vorgesehen ist, dass die textilen Lagen 50, 60 eine Kunststoffbeschichtung 40 aufweisen.

## Patentansprüche

1. Balg eines Übergangs, insbesondere zwischen zwei gelenkig miteinander verbundener Fahrzeugteile, umfassend mindestens eine Materialbahn
**dadurch gekennzeichnet,**
**dass** die Materialbahn ein Ringgewebe (30) aufweist.

2. Balg nach Anspruch 1,
**dadurch gekennzeichnet,**
**dass** das Ringgewebe (30) als metallisches Ringgewebe ausgebildet ist.

3. Balg nach einem der vorangehenden Ansprüche,
**dadurch gekennzeichnet,**
**dass** das Ringgewebe (30) aus einzelnen miteinander verbundenen Ringen (1) ausgebildet ist.

4. Balg nach einem der vorangehenden Ansprüche,
**dadurch gekennzeichnet,**
**dass** auf die einzelnen Ringe (1) auf Fäden (5) aufgezogen sind.

5. Balg nach einem der vorangehenden Ansprüche,
**dadurch gekennzeichnet,**
**dass** das Ringgewebe (30) in eine elastische Kunststoffschicht eingebettet ist.

6. Balg nach einem der vorangehenden Ansprüche,
**gekennzeichnet durch**
mindestens eine textile Lage (50, 60), wobei das Ringgewebe (30) mit dieser mindestens einen Lage verbindbar ist.

7. Balg nach Anspruch 6,
**dadurch gekennzeichnet,**
**dass** die textile Lage in eine Kunststoffschicht gebettet ist.

8. Balg nach einem der vorangehenden Ansprüche,
**dadurch gekennzeichnet,**
**dass** die mindestens eine textile Lage (50, 60) mit dem Ringgewebe (30) durch Nähen oder Heften derart verbunden ist, dass die Beweglichkeit der Materialbahn hinsichtlich ihrer Biegeeigenschaften nicht beeinträchtigt ist.

9. Balg nach einem der vorangehenden Ansprüche,
**dadurch gekennzeichnet,**
**dass** eine Kunststoffbeschichtung auf mindestens einer Seite mindestens einer textilen Lage (50, 60) aufgebracht ist.

## Claims

1. Bellows of a transfer, particularly between two pivotably interconnected vehicle parts, comprising at least one material web, **characterised in that** the material web comprises a ring-mesh fabric (30).

2. Bellows according to claim 1, **characterised in that** the ring-mesh fabric (30) is constructed as a metallic ring-mesh fabric.

3. Bellows according to one of the preceding claims, **characterised in that** the ring-mesh fabric (30) is constructed from individual interconnected rings (1).

4. Bellows according to any one of the preceding claims, **characterised in that** threads (5) are drawn onto the individual rings (1).

5. Bellows according to any one of the preceding claims, **characterised in that** the ring-mesh fabric (30) is embedded in an elastic synthetic material layer.

6. Bellows according to any one of the preceding claims, **characterised by** at least one textile layer (50, 60), wherein the ring-mesh fabric (30) is connectible with this at least one layer.

7. Bellows according to claim 6, **characterised in that** the textile layer is embedded in a synthetic material layer.

8. Bellows according to any one of the preceding claims, **characterised in that** the at least one textile layer (50, 60) is connected with the ring-mesh fabric (30) by sewing or stitching in such a manner that the movability of the material web is not impaired with respect to its bending characteristics.

9. Bellows according to any one of the preceding claims, **characterised in that** a synthetic material coating is applied to at least one side of at least one textile layer (50, 60).

## Revendications

1. Soufflet d'une intercommunication entre deux parties de véhicule reliées l'une à l'autre de façon articulée, comprenant au moins une bande de matériau,
**caractérisé en ce que**
la bande de matériau comporte un tissu à anneaux (30).

2. Soufflet selon la revendication 1,
**caractérisé en ce que**
le tissu à anneaux (30) est constitué par un tissu à anneaux métallique.

3. Soufflet selon l'une des revendications précédentes,
**caractérisé en ce que**
le tissu à anneaux (30) est constitué par différents anneaux (1) assemblés les uns aux autres.

4. Soufflet selon l'une des revendications précédentes,
**caractérisé en ce que**
des fils (5) sont enfilés sur les différents anneaux (1).

5. Soufflet selon l'une des revendications précédentes,
**caractérisé en ce que**
le tissu à anneaux (30) est noyé dans une couche de matière plastique élastique.

6. Soufflet selon l'une des revendications précédentes,
**caractérisé par**
au moins une couche textile (50, 60), le tissu à anneaux (30) pouvant être assemblé à cette au moins une couche.

7. Soufflet selon l'une des revendications précédentes,
**caractérisé en ce que**
la couche textile est noyée dans une couche de matière plastique.

8. Soufflet selon l'une des revendications précédentes,
**caractérisé en ce que**
la au moins une couche textile (50, 60) est assemblée au tissu à anneaux (30) par couture ou agrafage de telle manière que la mobilité de la bande de matière, en ce qui concerne ses propriétés de flexion, ne soit pas détériorée.

9. Soufflet selon l'une des revendications précédentes,
**caractérisé en ce que**
une enduction de matière plastique est appliquée sur au moins une face d'au moins une couche textile (50, 60).
